# EUROPEAN PATENT SPECIFICATION

(11) **EP 2 071 961 B1**
(45) Date of publication and mention of the grant of the patent: **18.11.2015**
(21) Application number: 06764347.8
(22) Date of filing: 25.05.2006
(51) Int. Cl.: A23G 1/32, A23G 1/02, A23L 1/30

(54) **METHOD FOR OBTAINING COCOA EXTRACTS WITH A HIGH CONTENT OF POLYPHENOLS**
VERFAHREN ZUR GEWINNUNG VON KAKAOEXTRAKTEN MIT HOHEM POLYPHENOLGEHALT
PROCÉDÉ D'OBTENTION D'EXTRAITS DE CACAO PRÉSENTANT UNE TENEUR ÉLEVÉE EN POLYPHÉNOLS

(43) Date of publication of application: 24.06.2009
(73) Proprietor: Naturex, 84140 Avignon (FR)
(72) Inventor: PASAMAR, María Angeles, 46930 Quart de Poblet (ES); IBARRA, Alvin, 46009 Valencia (ES); CIENFUEGOS-JOVELLANOS, Elena, 46930 Quart de Poblet (ES); LAGHI, Sara, 46930 Quart de Poblet (ES)
(74) Representative: Marek, Pierre
(86) International application number: PCT/ES2006/000294
(87) International publication number: WO 2007/138118

(56) References cited:
- WO-A1-2005/004619
- WO-A1-2005/115160
- US-A- 5 554 645
- US-A- 6 015 913
- US-B1- 6 627 232
- PORTER L J ET AL: "CACAO PROCYANIDINS: MAJOR FLAVANOIDS AND IDENTIFICATION OF SOME MINOR METABOLITES" PHYTOCHEMISTRY, PERGAMON PRESS, GB LNKD- DOI:10.1016/0031-9422(91)84228-K, vol. 30, no. 5, 1 January 1991 (1991-01-01), pages 1657-1663, XP001084175 ISSN: 0031-9422
- NIEMENAK ET AL: "Comparative study of different cocoa (Theobroma cacao L.) clones in terms of their phenolics and anthocyanins contents" JOURNAL OF FOOD COMPOSITION AND ANALYSIS, ACADEMIC PRESS, LONDON, GB LNKD- DOI:10.1016/J.JFCA.2005.02.006, vol. 19, no. 6-7, 27 January 2006 (2006-01-27), pages 612-619, XP005524682 online publication date 27-1-2006, printed version 1-9-2006 ISSN: 0889-1575
- DATABASE WPI Week200005, Derwent Publications Ltd., London, GB; AN 2000-057050, XP003019642 & JP 11 308978 A (MEIJI SEIKA KAISHA LTD) 09 November 1999
- DATABASE WPI Week199745, Derwent Publications Ltd., London, GB; AN 1997-484074, XP003019643 & JP 09 224606 A (MEIJI SEIKA KAISHA LTD) 02 September 1997

## Description

### Field of the Art

The invention relates to cocoa extracts, more specifically it relates to a process for obtaining cocoa extracts with high polyphenol content from unfermented cocoa seeds.

### State of the Art

There has recently been an increasing interest in food products such as green tea, apples, olives, wine and cocoa as a source of polyphenols due to the antioxidant character of these compounds.

The use of cocoa and chocolate in medicine and the idea of its possible health benefits have long been known. Already the natives of the "new world" left evidence of its use in their everyday life, Hernan Cortés being the first of the Spanish conquerors who mentioned the terms "cocoa" and "chocolate". However, it was the Swedish naturalist Karl von Linné (known as Carolus Linnaeus) who published a taxonomical study in which they were linked to its genus and species, *Theobroma Cocoa,* meaning "food of the gods". *Theobroma* Cocoa was used in the past to cure several disease but it disappeared progressively until recent studies have unexpectedly shown that cocoa has a great potential for "increasing health" (T.L. Dillinger et al., "Food of the Gods: Cure for the Humanity? A cultural history of the medicinal and ritual use of chocolate", J.Nutr., 130, 2057S-2072S (2000)).

There is currently quite a lot of patent and non-patent literature supporting the possible benefits of including cocoa in the diet due to the polyphenols it contains, specifically flavonoids and their specific class flavonols, which provide a beneficial effect in circulation (L.I. Meneen et al., "Consumption of foods rich in flavonoids is related to a decreased cardiovascular risk in apparently healthy French women", J.Nutr. 13, 923-926 (2004)), for the heart (M.G. Hertog et al., "Dietary antioxidant flavonoids and risk of coronary disease: the Zutphen Elderly Study", Lancet 342, 1007-1011 (1993)), against cancer (M.G. Hertog et al., "Flavonoid intake and long-term risk of coronary heart disease and cancer in the seven countries study", Arch. Inter. Med. 155, 381-386 (1995)), and contributes to preventing neurodegenerative diseases and *diabetes mellitus* (A. Scalbert et al., "Dietary polyphenols and the prevention of diseases", Crit. Rev. Food Sci. Nutr. 45, 287-306 (2005)).

The use of cocoa beans has evolved during centuries to what is currently called chocolate (processed cocoa beans with different additional component such as sugars and milk among others). Studies of chocolate components have been carried out by means of liquid chromatography and it has been observed that the main purified monomeric compounds contained in chocolate are the flavanols, catechin and epicatechin (J.F. Hammerstone et al., "Identification of procyanidins in cocoa (Theobroma cocoa) and chocolate using high-performance liquid chromatography/mass spectrometry", J. Agric. Food Chem., 47, 490-496 (1999)).

Several processes for obtaining cocoa extracts are known. US patent 5,554,645, published on 10.09.1996, describes the preparation of cocoa extracts of several genotypes in which the cocoa beans are freeze-dried, once frozen, they are depulped and shelled and the resulting mass is defatted and extracted with a solvent, such as methanol, aqueous acetone, or ethyl acetate, from which the cocoa extract is obtained. Cocoa extracts of several genotypes as well as synthetic phenols in antioxidant, anti-tumor and anti-cancer compositions have been tested. A kit useful for treating tumors or cancer is also claimed.

In US patent 6,015,913, published on 18.01.2000, cocoa seeds are heated at 100-110°C by means of infrared rays without being roasted, the shell being separated. Shelled seeds are passed through a press so as to defat them, a cocoa solid containing procyanidins being obtained.

In US patent 6,312,753, published on 06.11.2001, cocoa seeds having a fermentation factor of 275 or less, the shell is separated with the aid of infrared rays they are roasted to a temperature of 150°C, later being ground to obtain cocoa liquor. A partially defatted solid which is used as a component in the manufacture of bars and other food products can optionally be obtained from the roasted seeds.

US patent US 6,627,232, published on 30.09.2003, belonging to the same authors as the two previous ones, uses the processes of any of the described methods, with alternatively roasted and unroasted, fermented and unfermented seeds to obtain cocoa solids. From said solids, different methods and solvents (the preferred method is the counter-current method) for extracting caffeine and theobromine therefrom are tested.

It must thus be taken into account that the polyphenol content in cocoa beans depends to a great extent on the origin of said beans, their type, the geographical area where it has grown, the type of agriculture used to take care of them, how the plants and their beans have been collected and processed (fermentation, drying, roasting, defatting, etc) until obtaining the end products containing flavonoids (J. Wollgast, E. Anklam, "Review on polyphenols in Theobroma cocoa: changes in composition during the manufacture of chocolate and methodology for identification and quantification*, Food Research International, 33, 423-447 (2000)).

In patent document WO 2005/115160 A1, published on 08.12.2005, the authors of the present invention describe a process whereby a cocoa polyphenol concentrate is obtained, comprising the steps of: a) subjecting unfermented cocoa seeds to a blanching in water at a temperature of 85-100°C for a time period of 3 to 15 minutes; b) drying the unfermented seeds at a temperature of less than 85°C obtaining seeds with a moisture content of not more than 15%; c) grinding the seeds obtained in the previous step until at least 99% of the product has a particle size of 300µm; d) subjecting the ground seeds to an extraction; and e) concentrating said cocoa extract with polyphenols; wherein the process can optionally include a defatting step which is carried out prior to step d).

Furthermore, Spanish patent application P 200600462, priority document of WO 2007/096449, relevant under Art. 54(3) EPC only, the same authors describe a process for obtaining polyphenol-rich cocoa powder with low fat content characterized in that it consists of the following steps: 1) peeling; 2) depulping; 3) blanching; 4) drying; 5) defatting; 6) stabilizing; 7) grinding; and 8) micronizing, whereby a cocoa powder is obtained having a polyphenol content of more than 18% by weight of dry matter, a fat content of less than 1% by weight, a water content of 7% by weight and a bean size of less than 75 microns in 99%.

Portes et al, Phytochemistry, Vol. 30, No. 5, pp. 1657-1663, 1991, XP001084175, describe cacao procyanidins, major flavanoids and identification of same miner metabolites.

Another effect of polyphenols in mammals is that the antioxidant capacity of plasma is altered depending on the amount of flavonoids circulating in said plasma (J.P.E. Spencer et al., "Bioavailability of flavan-3-ols and procyanidins: gastrointestinal tract influences and their relevance to be active forms in vivo", Antioxid. Redox. Signal, 3, 1023-1039 (2000)). In other words, the effect caused by polyphenols in the organism depends on several factors, the most important being its bioavailability. This characteristic is closely related to the structure of the compound. The important of the catechin and epicatechin contents is thus based on the fact that since they are compounds with a monomeric structure, they are absorbed more easily in comparison to compounds with a larger molecular size, larger molecules need to be hydrolyzed to facilitate their absorption. For this reason, monomers have a greater bioavailability in the organism.

Due to the foregoing, it would be very beneficial for health to obtain products from cocoa beans that are better than those already existing in the state of the art, that have special features not only of selection, growth, collection and storage, but that are also obtained by means of a process which especially takes care to not damage or eliminate polyphenols, i.e. the flavonoids present in said beans.

Therefore, the object of the present invention is to obtain a cocoa product which not only has a high polyphenol content but these polyphenols have a high content of Flavan-3-ol monomers (catechin and epicatechin), their dimers (procyanidin B1 and procyanidin B2) and the remaining procyanidins with a larger molecular size (trimers, tetramers and polymeric procyanidins).

In order to reach this objective, the starting product has first been selected because it has a significant influence not only on the final and total polyphenol content but also on the monomer and dimer content of the products obtained.

Also with the aim of obtaining cocoa with highest levels of catechin, epicatechin and procyanidins B1 and B2, a process has been carried out in which the cocoa seeds are not fermented, because the results of various studies which have been carried out indicate that unfermented cocoa seeds contain significantly higher levels than fermented seeds, because up to 70-80% of the polyphenols can be degraded during the fermentation (See for example [0008] US patent 2004/0096566 A1). The cocoa obtained further has a low fat content because it is currently known that a low-fat diet is much more beneficial for health.

### Description of the Drawings

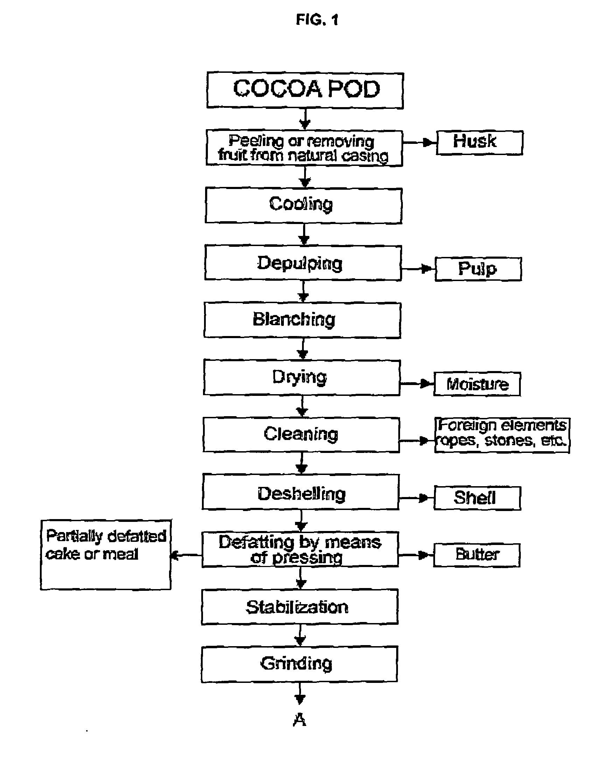

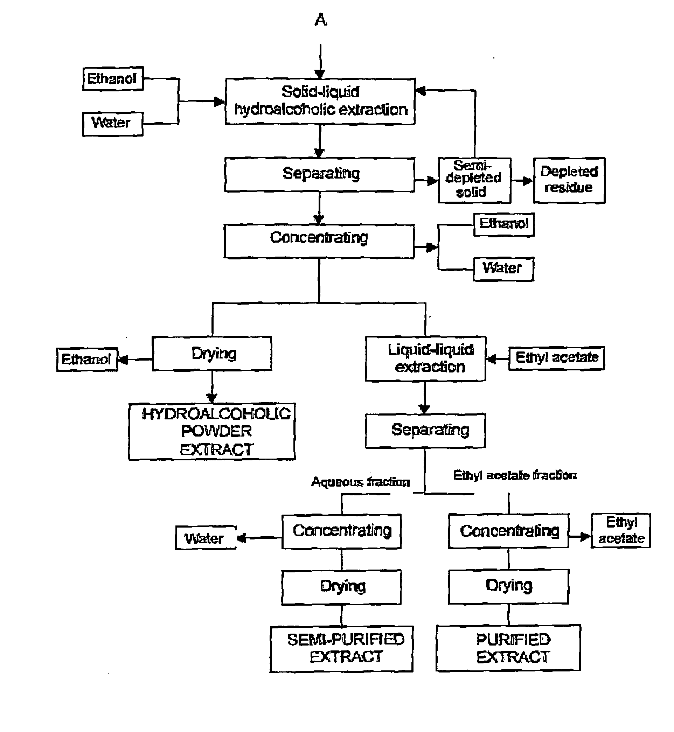

Figure 1: the first sheet shows the flow chart of the process for obtaining polyphenol-rich cocoa extracts from the collection of the cocoa pod until the stabilized ground cake/meal.

The second sheet shows the continuation of the flow chart of the process for obtaining polyphenol-rich cocoa extracts: from the extraction of the cake/meal until obtaining the hydroalcoholic, semi-purified and purified extracts.

### Description of the Invention

The process corresponding to this invention for obtaining polyphenol-rich cocoa extracts from unfermented cocoa seeds consists of the following steps:
a) Peeling the fruit (removing it from its natural casing)
b) Depulping the seeds
c) Blanching the seeds
d) Drying the seeds
e) Defatting by means of pressing
f) Stabilizing the defatted product
g) Grinding
h) Solid-liquid extraction
i) Solid-liquid separation
j) Concentrating the liquid extract
k) Obtaining the hydroalcoholic extract obtained by drying the concentrate obtained in (j)
l) Liquid-liquid extraction of the extract concentrated in (j) and separating the aqueous and organic phases
m) Concentrating the aqueous phase obtained in (I)
n) Obtaining the semi-purified extract by drying the concentrate obtained in (m)
o) Concentrating the organic phase obtained in (I)
p) Obtaining the purified extract by drying the concentrate obtained in (o)

More specifically, the invention provides with a process as defined in the appended claims.

Each of the phases of the process for producing cocoa extracts is described in detail below :

### a) Peeling the fruit or removing it from its natural casing.

Cocoa pods are the fruit from which the raw material which will be used to develop the entire process for obtaining cocoa extracts with high polyphenol content is obtained.

This phase of the process consists of opening the cocoa pods and extracting the fresh seeds from their original casing, which phase is carried out manually maintaining the necessary hygienic conditions to prevent the cocoa beans from being contaminated as much as possible. Fresh cocoa seeds are obtained in this step.

The fresh seeds can be cooled for the purpose of preserving the popyphenols present in the fresh cocoa seeds, as well as the partial elimination of the pulp covering them. The cooling is carried out by immersing the seeds in water, which must be at a temperature of not less than 1°C or more than 25°C. The internal bean temperature is thus reduced with this process, the risk of fermentation of the cocoa beans during their storage being reduced and the contact of cocoa beans with oxygen being prevented, which slows down enzymatic browning reactions. The cocoa beans can remain in these conditions for a maximum time period of 24 hours.

### b) Depulping the seeds

The object of this phase of the process is to completely or partially remove the pulp covering the fresh cocoa seeds for the purpose of optimizing the yield of the drying step and preventing the sticking together of the seeds once they are dry. The depulping is carried out for example with a stainless steel depulping machine, of the brand CI Talsa, model D500, adapted for this type of processing. This type of machine depulps 500 to 700 kg/h, and is provided with a receiving hopper where the beans are unloaded, which beans passes by gravity to a cylindrical sieve with a mesh size comprised between 3 and 5 mm. This sieve has a concentric shaft with rubber surface finish paddles driving the beans towards the walls of the sieve. The pulp passes through the sieve mesh and the clean beans leave through the cylinder opening.

### c) Blanching the seeds

This phase of the process consists of blanching the seeds with water at an internal seed temperature of not less than 85°C and not more than 100°C for a time period of not less than 3 minutes and not more than 15 minutes, preferably at a temperature of 95°C for 5 minutes.

The main objectives of this phase are to carry out a complete or partial inactivation of the activity of the polyphenol oxidase enzyme present in cocoa beans, which aids in preserving the initial polyphenol content present in the seed.

Polyphenol oxidase is an endogenous cocoa enzyme, its most important structural characteristic is the presence of two copper atoms in its active center, each of which is joined to three histidines. This enzyme has two enzymatic activities, one of which hydroxylates monophenols to diphenols (cresolase) and the other which oxidizes diphenols giving rise to quinones (catecholase); quinones can be converted into triphenols and subsequently oxidized to hydroxyquinones; these compounds are very reactive and can therefore give rise to polymerization reactions, giving rise to melanins. This entire set of reactions causes the degradation and reduction of phenolic cocoa compounds, therefore the inactivation of polyphenol oxidase aids in preserving the content of these compounds. Therefore, the objective of this step is to minimize the reduction of the total polyphenol content, as well as the content of the monomers catechin and epicatechin and of the dimers procyanidin B1 and procyanidin B2.

Another objective reached in this phase is the reduction of the possible microbial load of the beans.

A continuous blanching system for example is used to carry out this step. In this case, the beans pass directly from the depulping machine to a cylindrical mesh where they are longitudinally conveyed through the cylinder by a worm screw; during this process the beans are submersed in boiling water to achieve an internal bean temperature of 95°C, with a dwelling time of 5 minutes. The water is heated by means of a steam jacket and the dwelling time of the beans is controlled by changing the speed of the worm screw.

A batch blanching system can also be used; this system may consist of submersing limited amounts of cocoa beans in a stainless steel tank provided with water heating resistances. A cylinder manufactured with a stainless steel mesh allowing the inlet of hot water and preventing the exit of the beans is used to submerse the beans. Once the dwelling time has been completed, the cylinder with the beans is removed.

### d) Drying the seeds

The purpose of this phase is to reduce the moisture content of the blanched unfermented seed to minimize the microbial fermentation therein. The moisture of the seeds after drying must be comprised between 1% and 12% expressed in weight/weight. The drying can be carried out at room temperature drying the seeds in the sun or in dryers at a temperature of not more than 80°C.

A dry cocoa seed is obtained in this step which has a total polyphenol content that is usually more than 5%, reaching values of 15% expressed as a percentage of dry weight and measured according to the modified Folin-Ciocalteu method, in which polyphenols are expressed as catechin equivalents (Singleton, V.; Rossi,J. Colorimetry of total phenolics with phosphomolybdic-phosphotungstic acid reagents. Am. J. Enol. Vitic. 16, 144-158, (1965))

The beans are dried in a step dryer with an air circulation system, for example, in this dryer the moisture is removed by means of a process involving several heating steps which can be carried out in independent chambers. Heating parameters changing the drying speed of each of the steps are applied in each chamber, thus optimizing the bean drying and preventing the closure of the pores of said beans. A cooling step can be included after the last drying step, in which the seed temperature is lowered until reaching 30°C. The air is heated at the inlet of the system and its temperature is controlled throughout the entire process by means of arranging sensors in each of the chambers. At the outlet of the dryer, the moisture contained in the air is removed by means of a condensation process, such that it can be recirculated.

The drying can also be carried out in a batch dryer in drying platforms.

### e) Defatting by means of pressing

The objective of the pressing phase is to partially remove the fat present in unfermented cocoa beans. This process is carried out by extruding the cocoa beans. A screw press, also called expeller or extruder, can be used to carry out this phase of the process. This equipment consists of a continuous mechanical extractor in which the beans are pressed and the cocoa butter is extracted by pressure.

This equipment is formed by a hopper in which the cocoa beans are unloaded, subsequently passing to a vat in which they are heated at a temperature of not less than 35°C; this material is pressed by a helical screw rotating inside a cylinder, such that the fat is ejected and drained. The product obtained in this phase is called cake if it is from shelled beans, or meal if it is from beans with shell. The temperature of this product when coming out of the press must be less than 80°C.

A partially defatted inactivated unfermented cocoa cake is obtained in this phase of the process. The fat content of this cake must be comprised between 8% and 30% expressed in a percentage of dry weight, for example, 12%.

### f) Stabilizing the defatted product

The object of this phase of the process is to reduce the temperature of the cake (or meal) obtained in the previous step to a temperature of not more than 35°C so as to facilitate the subsequent grinding step. The stabilization process can be carried out with a cooler, provided internally with paddles stirring the product. This equipment can be provided with a jacket through which cold water is circulated to facilitate the reduction of the temperature in the product.

### g) Grinding

The object of this phase of the process is to reduce the particle size of the cake or meal for the purpose of improving the contact surface at the time of carrying out the extraction. In this step, a cocoa product is obtained of which at least 80%, preferably at least 95%, and still more preferably at least 99% of the cocoa particles, have a particle size of less than 0.5 mm.

The grinding can be carried out with a hammer mill provided with a sieve, or with any other grinding system which allows reaching the desired particle size.

### h) Solid-liquid extraction

The purpose of this phase is to carry out a selective extraction of the polyphenols present in the cocoa cake or meal. The migration of the polyphenols of the cocoa cake or meal to the extraction solvent depends on a set of factors such as the solid-liquid ratio, the particle size of the material to be extracted, the extraction mixture, the extraction temperature and the extraction time.

The solid/liquid ratio must be greater than 1/3, for example 1/5. This extraction is preferably carried out using ground cake or meal because the particle size reduction increases the contact surface and facilitates the extraction of polyphenols. This step of the process is carried out using a polar extraction mixture formed by ethanol and water, the ratio of these solvents being able to range from 30% ethanol and 70% water (v/v), to 100% ethanol, the preferred mixture being 70% ethanol and 30% water (v/v).

The extraction temperature can range from 40°C to 80°C, for example 70°C. The extraction time used is usually more than 30 minutes, for example 1 and a half hours.

This step is preferably carried out in stainless steel extractors provided with hot water or steam jackets to maintain the desired extraction temperature. The mixture is frequently stirred with stainless steel paddles which are actuated by means of motors provided with devices for changing the speed (mechanical or electrical) for the purpose of optimizing the extraction process.

### i) Solid-liquid separation

The purpose of this phase is to separate the half-depleted solid (solid phase) and the polyphenol-rich hydroalcoholic extract (liquid phase).

The half-depleted solid can be subjected to a new extraction step or be eliminated as a residue; this is carried out according to the remaining polyphenol content therein. Two extraction steps with the same raw material are usually carried out because very low mass yields are generally obtained in the third extraction step. The mass yield corresponds to the percentage ratio between the amount of solids recovered in the hydroalcoholic extract and the initial amount of cake or meal.

The hydroalcoholic extract obtained in the first extraction step is usually a dry residue comprised between 5 and 100 g/L, for example 25 g/L. The dry residue expresses the solid content in the extract. This value can decrease if a washing is carried out during the separation. In the event of successive extraction, they can be carried out in the same conditions described above. The extract obtained in the second extraction step can be combined with the extract obtained in the first step.

The separation can be carried out using several equipment; for example using a decanter, a vacuum filtration system with the optional addition of filtering earth, or through a plate filter.

### j) Concentrating the liquid extract

The objective of this phase is to remove ethanol and optionally part of the water of the hydroalcoholic extract. The process is carried out for example in stainless steel concentrators which may be of one, two and up to three steps. The concentration temperature can vary between 30°C and 70°C according to the vacuum pressure reached in the equipment. The solvents removed from the extract can be recovered and separated in a rectification tower to be reused in future extraction processes. In this step, ethanol is preferably eliminated completely from the hydroalcoholic extract and water is eliminated partially, such that the extract is in the aqueous medium.

This concentrate in an aqueous medium can be intended to obtain three end products. It can be directly dried to obtain the hydroalcoholic extract or purified with ethyl acetate for the purpose of obtaining the purified extract and the semi-purified extract.

### k) Obtaining the hydroalcoholic extract obtained by drying the concentrate obtained in (j)

The objective of this phase is to reduce the moisture content of the extract until it has powder characteristics. This step can be carried out using a spray-dryer, or a dryer with an alternative vacuum system for example. The drying temperatures must preferably be less than 40°C and not more than 100°C.

Other equipment can be used for the purpose of reaching the desired particle size in the end product, such as mills for example.

The hydroalcoholic extract obtained must have a moisture content of less than 10% expressed in weight/weight, preferably less than 5%, for example 3%.

The hydroalcoholic extract must have a particle size of less than 500 microns, preferably less than 200 microns, for example less than 50 microns.

The total polyphenol content is comprised between 35% and the 55% expressed in a dry base, for example 40%. The total polyphenol content was measured according to the Folin-Ciocalteau method.

This extract is significantly different from other extracts as regards its Flavan-3-ol and procyanidin content. The hydroalcoholic extract thus has levels of catechin between 10 and 70 mg/g; epicatechin between 80 and 350 mg/g; procyanidin B1 between 1 and 10 mg/g; and procyanidin B2 between 30 and 125 mg/g.

The determination of the flavonol content in each of the extracts was carried out by column chromatography using an Alginet 1100 chromatograph with C18 column packing and eluting with acidified water and acetonitrile with a UV diode array at a wavelength at 200 nm. The standards solutions were provided by Sigma Aldrich (catechin and epicatechin), and Extrasynthese (Procyanidins B1 and B2).

### l) Liquid-liquid extraction of the extract concentrated in (j) and separating the aqueous and organic phases

Purification of the hydroalcoholic concentrate by liquid-liquid extraction. The purpose of this phase is to obtain the purified extract and the semi-purified extract from the hydroalcoholic concentrate.

A liquid-liquid extraction with ethyl acetate is carried out for the purification. The purification occurs by the migration of one part of the polyphenols of the hydroalcoholic concentrate to ethyl acetate. Given that the hydroalcoholic content is in an aqueous medium, upon adding ethyl acetate and due to the difference in polarity, both of them form two non-miscible phases corresponding to an aqueous phase (semi-purified) and an organic ethyl acetate phase (purified).

The purification process is carried out in a counter-current system at a temperature of preferably more than 20°C and less than 70°C; for example at 50°C. The phases are then separated by difference in polarity. Once the phases are separated, these are concentrated and dried, two different products being obtained. These are the semi-purified extract obtained from the aqueous fraction and the purified extract obtained from the organic ethyl acetate fraction.

### m) Concentrating the aqueous extract obtained in (I)

The objective of this phase is to remove the water from the semi-purified extract. The concentration can be carried out in stainless steel concentrators which may be of one, two and up to three steps. The concentration temperature can change between 30°C and 70°C according to the vacuum pressure reached by the system. The extract can have a solid concentration preferably between 15 % and 40 % weight/weight; for example 20% weight/weight.

### n) Obtaining the semi-purified extract by drying the concentrate obtained in (m)

The objective of the drying phase is to reduce the moisture content until the extract has powder characteristics. This step can be carried out by using a spray-dryer, or a dryer with an alternative vacuum system for example. The drying temperatures must preferably not be less than 40°C or more than 80°C.

Other equipment can be used for the purpose of reaching the desired particle size in the end product, such as mills for example. The semi-purified extract must have a particle size of less than 500 microns, preferably less than 200 microns, for example less than 50 microns.

The semi-purified extract obtained must have a moisture content of less than 10% expressed in weight/weight, preferably less than 5 %, for example 3%.

The total polyphenol content comprised between 20% and 45% expresses in a dry base, for example 35%. The total polyphenol content was measured according to the Folin-Ciocalteu method.

The semi-purified extract has levels of catechin between 10 and 50 mg/g; epicatechin between 50 and 250 mg/g; procyanidin B1 between 1 and 8 mg/g; and procyanidin B2 between 25 and 90 mg/g.

The polyphenol profile analysis is carried out with the same one as described for the hydroalcoholic extract.

### o) Concentrating the organic phase obtained in (I)

The objective of this phase is to remove the organic solvent, in this case ethyl acetate, from the purified extract. The concentration can be carried out in stainless steel concentrators which may be of one, two and up to three steps. The concentration temperature can change between 30°C and 70°C according to the vacuum pressure reached by the system. The extract can have a solid concentration preferably between 15% and 40% weight/weight; for example 20% weight/weight.

### p) Obtaining the purified extract by drying the concentrate obtained in (o)

The objective of the drying phase is to reduce the solvent content until the extract has powder characteristics. This step can be carried out by using a spray-dryer, or a dryer with an alternative vacuum system for example. The drying temperatures must preferably not be less than 40°C or more than 80°C.

Other equipment can be used for the purpose of reaching the desired particle size in the end product, such as mills for example. The semi-purified extract must have a particle size of less than 500 microns, preferably less than 200 microns, for example less than 50 microns.

The purified extract obtained must have a moisture content of less than 10% expressed in weight/weight, preferably less than 5 %, for example 3%.

The total polyphenol content comprised between 60% and 90% expressed in a dry base, for example 85%. The total polyphenol content was measured according to the Folin-Ciocalteu method.

The purified extract has levels of catechin between 40 and 100 mg/g; epicatechin between 200 and 500 mg/g; procyanidin B1 between 5 and 20 mg/g; and procyanidin B2 between 80 and 250 mg/g.

The polyphenol profile analysis is carried out with the same as described for the hydroalcoholic extract.

### Optional phases

### - Cleaning

The cleaning phase is optional, and its objective is to eliminate the remains of foreign substances accompanying cocoa seeds. This cleaning can be carried out in a Bulher equipment, consisting of a sieving system with a mesh size comprised between 2 and 10 mm, and provided with an optional air suction system allowing the separation of foreign substances.

### - Shelling

The shelling phase is optional and its objective is to partially remove the shell surrounding the cocoa seeds. This process is carried out mechanically. Dry unfermented cocoa seeds pass through an automated system where they are fragmented, the released shell is removed by a suction process, thus obtaining cocoa nibs (the term nib refers to the shell-free cocoa fragments). Equipment such as those manufactured by Martin Lloveras, Bauermeister, Lehmann and others can be used, reaching yields of 2% by weight of residual shell on the nib.

Cocoa nibs with a residual shell content which must be of less than 7%, and preferably more than 2% are obtained in this phase.

### Example 1. Laboratory test. Comparison of the hydroalcoholic polyphenol extracts obtained by using cocoa cake with different fat content as a raw material.

A comparison of the different cocoa extracts which can be obtained according to the process described in the invention, depending on the raw material used in the extraction, is carried out in this test. To that end, two extraction processes with three consecutive extraction steps were carried out, using cocoa cake with different fat content and different polyphenol content as a raw material.

The process conditions for both extracts are similar, with only the cocoa cake used for the extraction changing.

### Description of the raw materials used in the extraction tests:

In both cases the cocoa cake used is from the Amazon variety cocoa seed from Ecuador, clone CCN51, unfermented, blanched, dried and shelled, the only variation between both being the conditions of the pressing process.
1. In extraction process 1 a cocoa cake with a fat content of 30% and a polyphenol content of 10% expressed in a dry base with moisture of 5.82% was used.
2. In extraction process 2 a cocoa cake with a fat content of 12% and a polyphenol content of 18% expressed in a dry base with moisture of 6.77%.

### Description of the conditions of the process:

The processing conditions are described below, these conditions being similar for the two tests

### • Solid-liquid extraction

100 g of cocoa cake are subjected to a solid-liquid extraction with an ethanol:water mixture at a ratio of 70:30, using a 2 liter glass reaction flask provided with a cooling system. Stirring is carried out mechanically using a Heidolph motor provided with blade paddles for that purpose. The extraction conditions are 70°C for an hour and a half with a 1/5 solid/liquid ratio.

### • Solid-liquid separation

The extract is separated from the half-depleted solid by means of a vacuum filtration process using a laboratory filtration process with a no. 411 ALBET 15-25 micron filter for that purpose.

The half-depleted solid is washed several times with distilled water and is then subjected again to a second and third solid-liquid extraction step for the purpose of studying the mass yields and the recovery of polyphenols obtained in each step.

### • Concentrating the extract

The obtained extract is concentrated at a temperature of 55°C and with a vacuum pressure of less than 150 mbar, using a Heidolph V V2000 laboratory rotary evaporation system for that purpose.

### • Drying the extract

The concentrated extract is dried at 70°C in a Gallenkam Model 5 A-5799 OVL-570010J laboratory oven provided with a vacuum system.

The total polyphenol content of the obtained extracts is quantified according to the modified Folin-Ciocalteu method, in which the polyphenols are expressed as catechin equivalents (Singleton, V.; Rossi, J. Colorimetry of total phenolics with phosphomolybdic-phosphotungstic acid reagents. Am. J. Enol. Vitic. 16, 144-158, 1965)

Table 1 shows the total polyphenol contents of the hydroalcoholic extracts, the mass recovery yields and the recovery yields of polyphenols obtained in the extraction processes, using cocoa cake with a 30% and 12% fat. The yields of the second and third step refer to the initial raw material contents.

**Table 1. Comparison of polyphenol contents, polyphenol mass yield and recovery yield of the tests with different raw material**

| | **Mass yield** | | **Polyphenol Yield** | | **Polyphenol Content (d.b)** | |
|---|---|---|---|---|---|---|
| **Raw Material** | Cake 30% fat | Cake 12% fat | Cake 30% fat | Cake 12% fat | Cake 30% fat | Cake 12% fat |
| **First Step** | 22.26% | 23.24% | 77.47% | 64.18% | 37.10% | 50.08% |
| **Second Step** | 3.24%* | 10.03%* | 7.92%* | 15.39%* | 26.11% | 27.82% |
| **Third Step** | 4.36%* | 2.18%* | 4.05%* | 4.22%* | 9.92% | 35.07% |

| | | | | | | |
|---|---|---|---|---|---|---|
| (*) Yields refer to the initial raw material | | | | | | |

### Example 2. Laboratory test: Comparison of the hydroalcoholic extracts of polyphenols obtained by changing the ethanol concentration in the extraction mixture.

The different cocoa extracts that can be obtained according to the ethanol concentration of the extraction mixture are compared in this test. Three extraction processes are carried out at the laboratory level at three different ethanol concentrations. The concentrations used are 50%, 70% and 90% (v/v).

The process conditions are similar in the three tests, only the ethanol concentration changes. The raw material used is the cocoa cake from processing the Amazon variety cocoa seed, clone CCN 51, unfermented, blanched, dried and shelled. The cake has a fat content of 12% and a polyphenol content of 18% expressed in a dry base. The moisture of this cake is 6.77%.

### Description of the conditions of the process for obtaining the hydroalcoholic extracts:

### • Solid-liquid extraction

100 g of cocoa cake are subjected to a solid-liquid extraction in a single extraction step. The extraction is carried out in a 2 liter glass reaction flask provided with a cooling system. The stirring is carried out mechanically using a Heidolph motor provided with blade paddles for that purpose. The extraction conditions are 70°C for an hour and a half with a 1/5 solid/liquid ratio.

The extraction mixtures used in each of the processes are:
Process 1: ethanol:water (50:50)
Process 2: ethanol:water (70:30)
Process 3: ethanol:water (90:10)

### • Solid-liquid separation

The extract is separated from the half-depleted solid by means of a vacuum filtration process using a laboratory filtration process with a no. 411 ALBET 15-25 micron filter for that purpose.

The solid residue obtained after filtration is eliminated.

### • Concentrating the extract

The obtained extract is concentrated at a temperature of 55°C and with a vacuum pressure of less than 150 mbar, using a Heidolph V V2000 laboratory rotary evaporation system for that purpose.

### • Drying the extract

The concentrated extract is dried at 70°C in a Gallenkam Model 5 A-5799 OVL-570010J laboratory oven provided with a vacuum system.

The total polyphenol content of the extracts obtained is quantified according to the modified Folin-Ciocalteu method, in which the polyphenols are expressed as catechin equivalents (Singleton, V.; Rossi,J. Colorimetry of total phenolics with phosphomolybdio-phosphotungstic acid reagents. Am. J. Enol. Vitic. 16, 144-158, 1965)

Table 2 shows polyphenol contents, the mass yields and the recovery yields of polyphenols obtained at different ethanol concentrations.

**Table 2. Results of the extraction tests using different ethanol concentrations**

| | **% Polyphenols in the extract (d.b)** | **% Mass yield** | **% Polyphenol yield** |
|---|---|---|---|
| 50% Ethanol | **48.83** | 24.24 | 65.32 |
| 70% Ethanol | **50.08** | 23.24 | 64.18 |
| 90% Ethanol | **52.12** | 19.17 | 55.11 |

The results show that an increase of the ethanol concentration favors the total polyphenol concentration obtained in the extract. Accordingly, when the polyphenol concentration in the extract increases, the polyphenol mass yield and recovery decrease.

Graph 1 shows the increased polyphenol concentration according to the ethanol concentration of the extraction mixture.

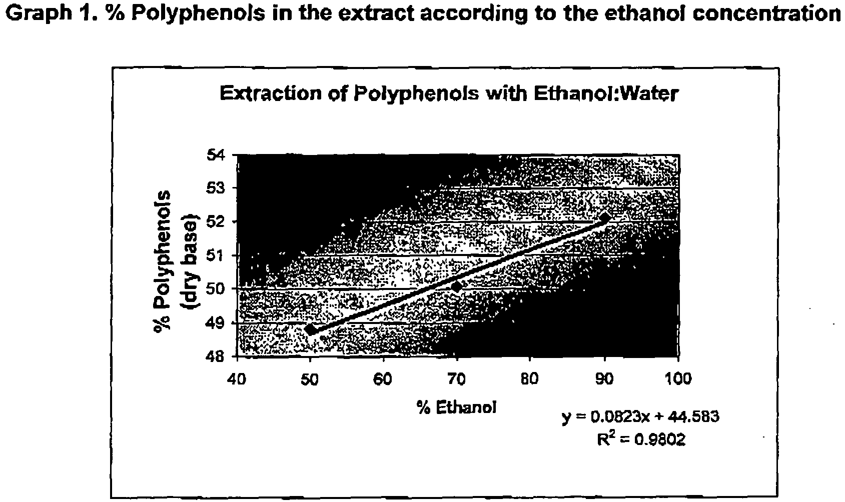

Graph 2 shows how an increase of the ethanol concentration reduces the extraction mass yields

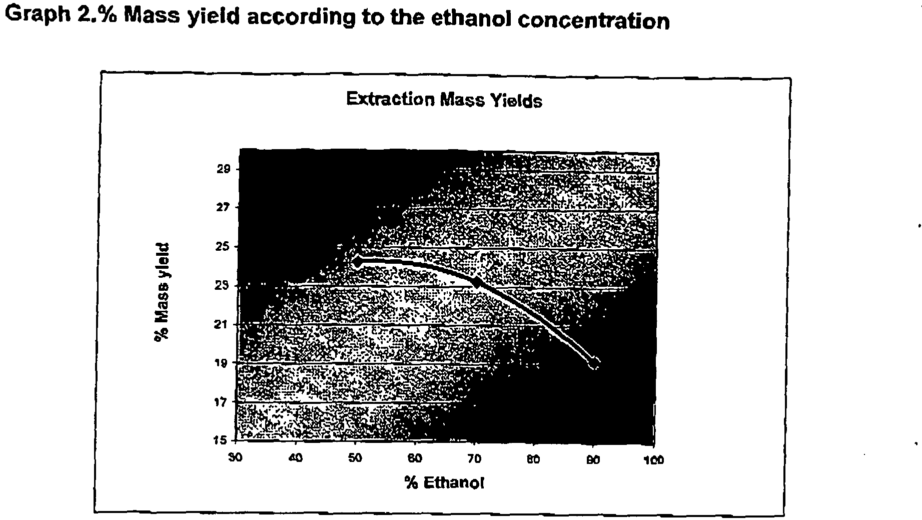

Graph 3 shows how the polyphenol recovery decreases when the ethanol concentration increases.

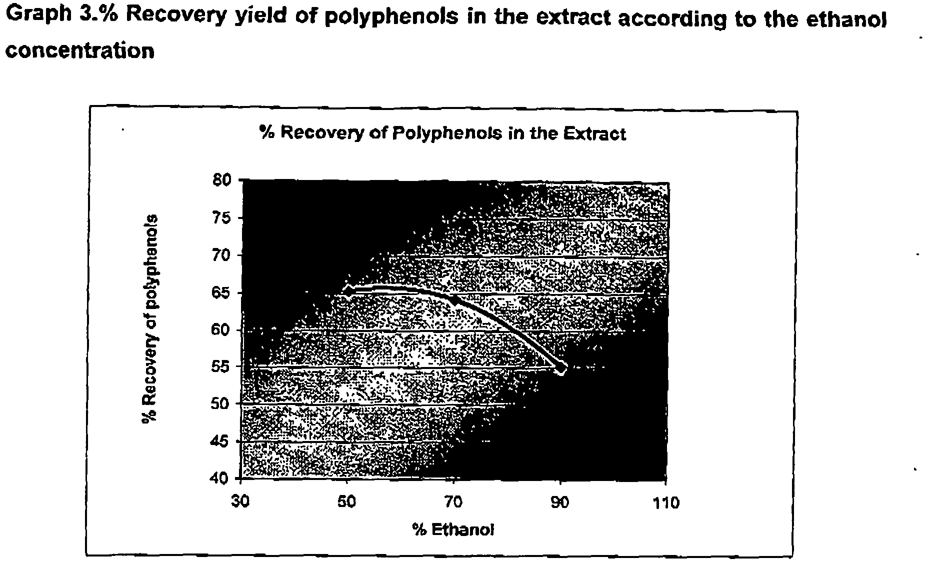

### Example 3. Laboratory test: Obtaining the Purified Extract

This test is carried out using as a raw material the cocoa cake from processing the Amazon variety cocoa seed, clone CCN 51, unfermented, blanched, dried and shelled. The cake has a fat content of 12% and a polyphenol content of 18% expressed in a dry base. The moisture of this cake is 6.77%.

### Description of the conditions of the process for obtaining the purified extract:

### • Solid-liquid extraction

100 g of cocoa cake are subjected to a solid-liquid extraction in a single extraction step. The extraction is carried out in a 2 liter glass reaction flask provided with a cooling system. The stirring is carried out mechanically using a Heidolph motor provided with blade paddles for that purpose. The extraction conditions are 70°C for an hour and a half with a 1/5 solid/liquid ratio.

### • Solid-liquid separation

The extract is separated from the half-depleted solid by means of a vacuum filtration process using a laboratory filtration process with a no. 411 ALBET 15-25 micron filter for that purpose.

The solid residue obtained after the separation is eliminated.

### • Concentrating the hydroalcoholic extract

The obtained extract is concentrated until complete elimination of the ethanol, at a temperature of 55°C and with a vacuum pressure of less than 150 mbar, using a laboratory rotary evaporation system for that purpose.

### • Liquid-liquid extraction

In this step the concentrated extract is subjected to a purification process by means of a liquid-liquid extraction with ethyl acetate. The concentrated extract is taken and diluted twice with water for that purpose, and then a proportional volume of ethyl acetate is added and the mixture is vigorously stirred at a temperature of 50°C for 30 minutes in a 2 liter glass reaction flask. The stirring is carried out mechanically, using a Heidolph stirring motor for that purpose. The mixture is then separated in a decanting funnel and the fraction corresponding to ethyl acetate was recovered.

### • Concentrating the purified extract

The obtained extract is concentrated until complete elimination of the ethanol, at a temperature of 40°C and with a vacuum pressure of less than 150 mbar, using a Heidolph V V2000 laboratory rotary evaporation system for that purpose.

### • Drying the purified extract

The concentrated extract is dried in an air circulation oven with an external ventilation system until moisture of 5.4%.

After this step 2.43 g of purified extract with a total polyphenol content of 87% were obtained.

The total polyphenol content of the obtained extracts is quantified according to the modified Folin-Ciocalteu method, in which the polyphenols are expressed as catechin equivalents (Singleton, V.; Rossi,J. Colorimetry of total phenolics with phosphomolybdic-phosphotungstic acid reagents. Am. J. Enol. Vitic. 16, 144-158, 1965)

Table 3 shows the total polyphenol contents, the mass recovery yield and the recovery yield of polyphenols obtained in this test.

**Table 3. Percentage of polyphenols and yields of the test for obtaining the purified extract**

| | **% Polyphenols in the extract (d.b)** | **% Mass yield** | **% Polyphenol yield** |
|---|---|---|---|
| **Purified extract** | 87% | 2.47% | 11.93 |

### Example 4. Industrial test: Obtaining polyphenol-rich cocoa extracts at an industrial level

A cocoa genotype, clone CCN51 of the Amazon variety, from the region of Quevedo in Ecuador, was used to carry out the process.

The process is carried out with 10,000 kg of fresh cocoa seeds in mucilaginous pulp, and the contents of the seed in a wet base are about 65% moisture in which the moisture corresponding to the pulp comprises 17% fat, 4% shell, 3.5% total polyphenols. These seeds were subjected to a depulping treatment using a stainless steel model D500 CI Talsa depulping machine for this type of processing for that purpose. The beans are loaded into the hopper and passed to a cylindrical sieve due to gravity; this sieve has a mesh size comprised between 3 and 5 mm and internally has paddles pushing the beans towards the walls of the sieve, thus achieving the separation of 90% of the pulp present in the beans and obtaining 7,210 kg of depulped beans with a residual pulp content of 3%, 47% moisture, 23.5% fat and 5.5% shell, and 4.8% total polyphenols.

Once most of the pulp is removed from the beans, the latter are subjected to a blanching treatment; to that end the beans went directly from the depulping machine to a cylindrical mesh in which it is longitudinally conveyed through the cylinder by a worm screw; during this process the beans were submersed in boiling water to achieve an inner bean temperature of 95°C, with a dwelling time of 5 minutes. The water is heated by means of a steam jacket and the dwelling time of the beans is controlled by changing the speed of the worm screw.

The beans obtained in the blanching step, with moisture close to 50%, are dried at 70°C until reducing their moisture to about 6%; a step dryer with an air circulation system is used to that end which was especially designed for this process. In this dryer the cocoa beans are subjected to different drying conditions in each of the steps, changing the drying speed in each of them. After this process 3,805 kg of dry beans are obtained with a residual moisture of 6%, 44% fat, 10.5% shell and 9.1% total polyphenols, all the contents expressed in a wet base.

The dry beans are subjected to a cleaning treatment in which foreign particles, such as ropes, stones, etc., are removed; this cleaning is carried out in a Buhler cleaning machine. Once the beans are cleaned, they went to a fragmenting and shelling step, in which the beans are fragmented, obtaining a fine grains classified by size. The shell is removed by suction, removing at least 90% of the shell present in the beans. This process is carried out in a DK 100 Martin Lloveras type deshelling machine and 3,475 kg of deshelled cocoa nibs are obtained with a residual shell content of 2%, 6.5% moisture, 48% fat and 10% total polyphenols.

The beans obtained in this step are subjected to a defatting process by means of pressing in an expeller; this process is carried out by means of extruding the cocoa nibs, thus removing part of the fat fraction. A continuous KP Harburguer Einsem Bronzewerke press was used to carry out this process. 1,910 kg of cocoa cake are obtained from this process with fat content of 9%, 18% polyphenols expressed in a wet base, the moisture of cake being 10%.

The cake obtained in this step came out at a temperature > 35°C and it had to be subjected to a cooling and stabilizing process in order to grind it. This is carried out using a rotary blade cooler. The temperature of the cake when it came out of the cooler is about 15°C.

Once the cake is stabilized it is subjected to a grinding which is carried out in a hammer mill provided with a sieve (MS-33-M1) manufactured by Gruber Hnos. S.A., obtaining 1,890 kg of ground cake with a particle size of less than 500 microns in 99% of the cake and moisture of 10%.

In order to obtain the extracts with a high polyphenol content, 1,850 kg of this dry cake by weight are subjected to a solid-liquid extraction process. The extraction is carried out with a mixture of ethanol:water (70:30) at 70°C under constant stirring for an hour and a half. Once this time passed, the extract is separated from the depleted solid by means of a vacuum filtration process. The obtained extract is concentrated at 55°C in a concentrator with a vacuum pressure of 150 mbar, until eliminating all the ethanol, thus obtaining a hydroalcoholic concentrate with a mass yield of 23% and 64% recovery of polyphenols. Half of this concentrated extract is dried in a spray-drying system at 70°C until reducing the moisture to about 10%. In this step 190 kg of hydroalcoholic extract are obtained in this step with a total polyphenol content of 50% expressed in a dry base, with a mass yield of 11% and recovery yield of polyphenols of 32% in relation to the cake.

The remaining concentrated extract is subjected to a liquid-liquid extraction in an extractor at 50°C. Two phases, an aqueous phase and another ethyl acetate phase, are obtained from this step. The aqueous phase is concentrated in a concentrator at 55°C and dried with a spray-drying system at a temperature of 70°C, obtaining 142 kg of semi-purified extract with a polyphenol content of 40% expressed in a dry base; in this step a mass yield of 9% and recovery yield of polyphenols of 20% is obtained in relation to the initial cake.

The ethyl acetate phase is concentrated at a temperature of 40°C and dried in a spray-drying system, obtaining 38 kg of purified extract with a polyphenol content of 85% expressed in a dry base; in this step a mass yield of 2.5% and a recovery yield of polyphenols of 11.9% is obtained in relation to the initial cake.

## Claims

1. Process for obtaining polyphenol-rich cocoa powder extracts **characterized by** the following steps :
a. Peeling the cocoa pods to obtain fresh cocoa seeds,
b. Depulping the seeds of step a),
c. Blanching the seeds of step b) with water to reach an internal seed temperature of not less than 85°C and not more than 100°C during a period of not less than 3 minutes and not more than 15 minutes,
d. Drying the seeds at a temperature of not more than 80°C,
e. Defatting the dried seeds obtained in step d) by means of pressing,
f. Stabilizing the defatted product obtained in step e),
g. Grinding the product obtained in step f),
h. Solid-liquid extraction using a polar extraction mixture formed by ethanol and water at a temperature range from 40 to 80°C for more than 30 minutes,
i. Solid-liquid separation,
j. Concentrating the extract liquid,
k. Obtaining the hydroalcoholic extract obtained by drying the concentrate obtained in j),
or
l. Liquid-liquid extraction of the extract concentrated in j) using ethyl acetate and separating the aqueous and organic phases,
m. Concentrating the aqueous phase obtained in I),
n. Obtaining the semi-purified extract by drying the concentrate obtained in m),
or
o. Concentrating the organic phase obtained in I), and
p. Obtaining the purified extract by drying the concentrate obtained in o).

2. Process according to claim 1, **characterized in that** it further includes a seed cooling step after the fruit peeling step a) at a temperature of not less than 1°C or more than 25°C for the purpose of delaying fermentation.

3. Process according to claims 1 and 2, **characterized in that** in the drying step d) the temperature of the beans is less than 80°C.

4. Process according to claims 1 to 3, **characterized in that** it further includes a seed shelling step after the drying step d) or the cleaning step.

5. Process according to claims 1 to 4, **characterized in that** the defatting step by means of pressing e) is carried out at a temperature of less than 80°C, obtaining a fat content in the cocoa cake or meal between 8 and 30 % in a dry base.

6. Process according to claims 1 to 5, **characterized in that** in the solid-liquid extraction step the solvent is a mixture of 70 % ethanol and 30 % water.

7. Process according to claims 1 to 6, **characterized in that** in the liquid extract concentration step j) the process temperatures are less than 70°C.

8. Process according to claims 1 to 7, **characterized in that** in the organic and aqueous phase concentration step I) the process temperatures are less than 70°C.

9. Polyphenol-rich hydroalcoholic cocoa powder extract obtainable according to claim 1, wherein catechin is present from 10 to 70 mg/g, epicatechin is present from 80 to 350 mg/g, procyanidin B1 is present from 1 to 10 mg/g and procyanidin B2 is present from 30 to 124 mg/g wherein the cocoa particles have a particle size of less than 500 µm, preferably less than 200 µm, for example less than 50 µm and the extract is obtained with a moisture content of less than 10 % expressed in weight /weight, preferably less than 5 %, for example 3 %.

10. Semi-purified polyphenol-rich cocoa powder extract obtainable according to claim 1, wherein catechin is present from 10 to 50 mg/g, epicatechin is present from 50 to 250 mg/g, procyanidin B1 is present from 1 to 8 mg/g and procyanidin B2 is present from 25 to 90 mg/g wherein the cocoa particles have a particle size of less than 500 µm, preferably less than 200 µm, for example less than 50 µm and the extract is obtained with a moisture content of less than 10 % expressed in weight /weight, preferably less than 5 %, for example 3 %.

11. Polyphenol-rich ethyl acetate cocoa powder extract obtainable according to claim 1, wherein catechin is present from 40 to 100 mg/g, epicatechin is present from 200 to 500 mg/g, procyanidin B1 is present from 5 to 20 mg/g and procyanidin B2 is present from 80 to 250 mg/g wherein the cocoa particles have a particle size of less than 500 µm, preferably less than 200 µm, for example less than 50 µm and the extract is obtained with a moisture content of less than 10 % expressed in weight /weight, preferably less than 5 %, for example 3 %.

## Patentansprüche

1. Verfahren zur Gewinnung von Polyphenol-reichen Kakaopulver-Extrakten, **gekennzeichnet durch** folgende Schritte:
a. Schälen der Kakaofrüchte, um frische Kakaosamen zu erhalten,
b. Maischung der Samen von Schritt a),
c. Blanchieren der Samen von Schritt b) mit Wasser, um eine interne Samentemperatur von nicht weniger als 85°C und nicht mehr als 100°C während einer Zeitdauer von nicht weniger als 3 Minuten und nicht mehr als 15 Minuten zu erreichen,
d. Trocknen der Samen bei einer Temperatur von nicht mehr als 80°C,
e. Entfetten der **durch** Pressen erhaltenen getrockneten Samen von Schritt d),
f. Stabilisieren des entfetteten Produktes von Schritt e),
g. Mahlen des erhaltenen Produkts von Schritt f),
h. Fest-Flüssig-Extraktion unter Verwendung einer polaren Extraktionsmischung gebildet aus Ethanol und Wasser in einem Temperaturbereich von 40 bis 80°C für mehr als 30 Minuten,
i. Fest-Flüssig-Trennung,
j. Konzentrieren der Extraktflüssigkeit,
k. Erhalten des hydroalkoholischen Extrakts **durch** Trocknen des in j) erhaltenen Konzentrats
oder
l. Flüssig-Flüssig-Extraktion des in j) konzentrierten Extrakts unter Verwendung von Ethylacetat und Trennen der wässrigen und organischen Phasen,
m. Konzentrieren der in 1) erhaltenen wässrigen Phase,
n. Erhalten des halbgereinigten Extrakts **durch** Trocknen des in m) erhaltenen Konzentrats
oder
o. Konzentrieren der in l) erhaltenen organischen Phase und
p. Erhalten des gereinigten Extrakts **durch** Trocknen des in o) erhaltenen Konzentrats.

2. Verfahren nach Anspruch 1, **gekennzeichnet dadurch, dass** es außerdem einen Samenkühlschritt nach der Fruchtschälschritt a) bei einer Temperatur von nicht weniger als 1°C oder mehr als 25°C enthält, zum Zwecke der Verzögerung der Gärung.

3. Verfahren nach den Ansprüchen 1 und 2, **gekennzeichnet dadurch, dass** die Bohnentemperatur in dem Trocknungsschritt d) weniger als 80°C ist.

4. Verfahren nach den Ansprüchen 1 bis 3, **gekennzeichnet dadurch, dass** es außerdem einen Samenbeschussschritt nach dem Trocknungsschritt d) oder dem Reinigungsschritt enthält.

5. Verfahren nach den Ansprüchen 1 bis 4, **gekennzeichnet dadurch, dass** der Entfettungsschritt durch Pressen e) bei einer Temperatur von weniger als 80°C durchgeführt wird, wodurch ein Fettgehalt in Kakaokuchen oder Essen zwischen 8 und 30% in einer trockenen Base gewonnen wird.

6. Verfahren nach den Ansprüchen 1 bis 5, **gekennzeichnet dadurch, dass** das Lösungsmittel in dem Fest-Flüssig-Extraktionsschritt ein Gemisch aus 70% Ethanol und 30% Wasser ist.

7. Verfahren nach den Ansprüchen 1 bis 6, **gekennzeichnet dadurch, dass** die Prozesstemperaturen in dem flüssigen Extraktkonzentrationsschritt j) weniger als 70°C sind.

8. Verfahren nach den Ansprüchen 1 bis 7, **gekennzeichnet dadurch, dass** die Prozesstemperaturen in dem organischen und wässrigen Phasenkonzentrationsschritt l) weniger als 70°C sind.

9. Polyphenol-reicher hydroalkoholischer Kakaopulver-Extrakt erhältlich nach Anspruch 1, wobei Catechin zwischen 10 und 70 mg/g vorhanden ist, Epicatechin zwischen 80 und 350 mg/g vorhanden ist, Procyanidin B1 zwischen 1 und 10 mg/g vorhanden ist und Procyanidin B2 zwischen 30 und 124 mg/g vorhanden ist, wobei die Kakaopartikel eine Partikelgröße von weniger als 500µm haben, vorzugsweise von weniger als 200µm, beispielsweise weniger als 50µm und der Extrakt wird mit einem Feuchtigkeitsgehalt von weniger als 10%, exprimiert in Gewicht / Gewicht, vorzugsweise weniger als 5%, beispielsweise 3% gewonnen.

10. Halbgereinigter Polyphenol-reicher hydroalkoholischer Kakaopulver-Extrakt erhältlich nach Anspruch 1, wobei Catechin zwischen 10 und 50 mg/g vorhanden ist, Epicatechin zwischen 50 und 250 mg/g vorhanden ist, Procyanidin B1 zwischen 1 und 8 mg/g vorhanden ist und Procyanidin B2 zwischen 25 und 90 mg/g vorhanden ist, wobei die Kakaopartikel eine Partikelgröße von weniger als 500µm haben, vorzugsweise von weniger als 200µm, beispielsweise weniger als 50µm und der Extrakt wird mit einem Feuchtigkeitsgehalt von weniger als 10%, exprimiert in Gewicht / Gewicht, vorzugsweise weniger als 5%, beispielsweise 3% gewonnen.

11. Polyphenol-reicher Ethylacetat Kakaopulver-Extrakt erhältlich nach Anspruch 1, wobei Catechin zwischen 40 und 100 mg/g vorhanden ist, Epicatechin zwischen 200 und 500 mg/g vorhanden ist, Procyanidin B1 zwischen 5 und 20 mg/g vorhanden ist und Procyanidin B2 zwischen 80 und 250 mg/g vorhanden ist, wobei die Kakaopartikel eine Partikelgröße von weniger als 500µm haben, vorzugsweise von weniger als 200µm, beispielsweise weniger als 50µm und der Extrakt wird mit einem Feuchtigkeitsgehalt von weniger als 10%, exprimiert in Gewicht / Gewicht, vorzugsweise weniger als 5%, beispielsweise 3% gewonnen.

## Revendications

1. Procédé d'obtention d'extraits de poudre de cacao à teneur élevée en polyphénols, **caractérisé par** les étapes suivantes :
a. le pelage des cabosses de cacao pour obtenir des fèves fraîches de cacao,
b. le dépulpage des fèves de l'étape a),
c. le blanchiment des fèves de l'étape b) avec de l'eau pour atteindre une température interne de fève qui n'est pas inférieure à 85 °C et qui n'est pas supérieure à 100 °C pendant une période qui n'est pas inférieure à 3 minutes et qui n'est pas supérieure à 15 minutes,
d. le séchage des fèves à une température qui n'est pas supérieure à 80 °C,
e. le dégraissage par pressage des fèves sèches obtenues dans l'étape d),
f. la stabilisation du produit dégraissé obtenu dans l'étape e),
g. le broyage du produit obtenu dans l'étape f),
h. une extraction solide/liquide en utilisant un mélange polaire d'extraction formé d'éthanol et d'eau à une température de 40 °C à 80 °C pendant plus de 30 minutes,
i. une séparation solide/liquide,
j. la concentration de l'extrait liquide,
k. l'obtention de l'extrait hydroalcoolique obtenu par le séchage du concentré obtenu dans l'étape j),
ou
l. une extraction liquide/liquide de l'extrait concentré dans l'étape j) en utilisant de l'acétate d'éthyle et la séparation de la phase aqueuse et de la phase organique,
m. la concentration de la phase aqueuse obtenue dans l'étape 1),
n. l'obtention de l'extrait semi-purifié par séchage du concentré obtenu dans l'étape m),
ou
o. la concentration de la phase organique obtenue dans l'étape 1), et
p. l'obtention de l'extrait purifié par séchage du concentré obtenu dans l'étape o).

2. Procédé selon la revendication 1, **caractérisé en ce qu'**il inclut en outre une étape de refroidissement des fèves après l'étape a) de pelage des fruits à une température qui n'est pas inférieure à 1 °C ou qui est supérieure à 25 °C dans le but de retarder la fermentation.

3. Procédé selon les revendications 1 et 2, **caractérisé en ce que**, dans l'étape d) de séchage, la température des fèves est inférieure à 80 °C.

4. Procédé selon l'une quelconque des revendications 1 à 3, **caractérisé en ce qu'**il inclut en outre une étape d'écossage des fèves après l'étape d) de séchage ou l'étape de nettoyage.

5. Procédé selon l'une quelconque des revendications 1 à 4, **caractérisé en ce que** l'étape e) de dégraissage par pressage est réalisée à une température qui n'est pas inférieure à 80 °C, pour obtenir une teneur en graisse dans le tourteau ou la farine de cacao située entre 8 % et 30 % sur une base sèche.

6. Procédé selon l'une quelconque des revendications 1 à 5, **caractérisé en ce que**, dans l'étape d'extraction solide/liquide, le solvant est un mélange contenant 70 % d'éthanol et 30 % d'eau.

7. Procédé selon l'une quelconque des revendications 1 à 6, **caractérisé en ce que**, dans l'étape j) de concentration de l'extrait liquide, les températures du procédé sont inférieures à 70 °C.

8. Procédé selon l'une quelconque des revendications 1 à 7, **caractérisé en ce que**, dans l'étape 1) de concentration de la phase organique et de la phase aqueuse, les températures du procédé sont inférieures à 70 °C.

9. Extrait hydroalcoolique de poudre de cacao à teneur élevée en polyphénols pouvant être obtenu selon la revendication 1, dans lequel de la catéchine est présente à raison de 10 mg/g à 70 mg/g, de l'épicatéchine est présente à raison de 80 mg/g à 350 mg/g, de la procyanidine B1 est présente à raison de 1 mg/g à 10 mg/g et de la procyanidine B2 est présente à raison de 30 mg/g à 124 mg/g, dans lequel les particules de cacao ont une taille de particule inférieure à 500 µm, de préférence inférieure à 200 µm, par exemple inférieure à 50 µm, et l'extrait est obtenu avec une teneur en humidité inférieure à 10 % exprimée en poids/poids, de préférence inférieure à 5 %, par exemple de 3 %.

10. Extrait semi-purifié de poudre de cacao à teneur élevée en polyphénols pouvant être obtenu selon la revendication 1, dans lequel de la catéchine est présente à raison de 10 mg/g à 50 mg/g, de l'épicatéchine est présente à raison de 50 mg/g à 250 mg/g, de la procyanidine B1 est présente à raison de 1 mg/g à 8 mg/g et de la procyanidine B2 est présente à raison de 25 mg/g à 90 mg/g, dans lequel les particules de cacao ont une taille de particule inférieure à 500 µm, de préférence inférieure à 200 µm, par exemple inférieure à 50 µm, et l'extrait est obtenu avec une teneur en humidité inférieure à 10 % exprimée en poids/poids, de préférence inférieure à 5 %, par exemple de 3 %.

11. Extrait de poudre de cacao à teneur élevée en polyphénols dans l'acétate d'éthyle pouvant être obtenu selon la revendication 1, dans lequel de la catéchine est présente à raison de 40 mg/g à 100 mg/g, de l'épicatéchine est présente à raison de 200 mg/g à 500 mg/g, de la procyanidine B1 est présente à raison de 5 mg/g à 20 mg/g et de la procyanidine B2 est présente à raison de 80 mg/g à 250 mg/g, dans lequel les particules de cacao ont une taille de particule inférieure à 500 µm, de préférence inférieure à 200 µm, par exemple inférieure à 50 µm, et l'extrait est obtenu avec une teneur en humidité inférieure à 10 % exprimée en poids/poids, de préférence inférieure à 5 %, par exemple de 3 %.
